(19) Europäisches Patentamt / European Patent Office / Office européen des brevets

(11) **EP 1 843 335 A2**

(12) **EUROPEAN PATENT APPLICATION**

(43) Date of publication:
**10.10.2007 Bulletin 2007/41**

(51) Int Cl.:
***G11B 7/135*** (2006.01)

(21) Application number: **07006889.5**

(22) Date of filing: **02.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **07.04.2006 JP 2006106718**

(71) Applicant: **Funai Electric Co., Ltd.**
**Daito-shi,**
**Osaka 574-0013 (JP)**

(72) Inventors:
• **Shihara, Tetsuya**
**Daito-shi**
**Osaka 574-0013 (JP)**
• **Shimizu, Shinza**
**Daito-shi**
**Osaka 574-0013 (JP)**
• **Eiza, Tsuyoshi**
**Daito-shi**
**Osaka 574-0013 (JP)**
• **Nagashima, Kenji**
**Daito-shi**
**Osaka 574-0013 (JP)**

(74) Representative: **Beetz & Partner**
**Steinsdorfstrasse 10**
**D-80538 München (DE)**

(54) **Aberration correcting device, optical pickup device, information reproducing apparatus, and aberration correcting method**

(57) A drive controller for electrode group A obtains a disc type, a current layer, and a temperature of the liquid crystal element, and based on contents of the information, it obtains drive voltage values to be applied to the electrodes of the group of electrodes A from the set value table. When the drive voltages to be applied to the group of electrodes A are determined, the drive controller for electrode group A finishes the process, and the process flow goes to a process performed by the drive controller for electrode group B. The drive controller for electrode group B performs initialization of segment numbers. Then, it determines how a phase correction quantity of an electrode Am has changed along with an increase of a radius of the liquid crystal element by using graphs and data, so as to determine the drive voltages to be applied to the group of electrodes B by different calculating methods for different areas in which the electrode Am is disposed.

FIG. 1

EP 1 843 335 A2

Description

BACKGROUND OF THE INVENTION

Field of the Invention

The present invention relates to an optical pickup device and an aberration correcting device that are provided to an information processing apparatus that uses an optical recording medium. In particular, the present invention relates to an aberration correcting device that enables correction of wave aberration, an optical pickup device, an information reproducing apparatus, and an aberration correcting method.

Description of Related Art

Recently, optical recording media including a compact disc (CD) and a digital versatile disc (DVD) have become commonplace and widely available. Furthermore, in order to increase a quantity of information recorded on the optical recording medium, researches on the high density of the optical recording medium have been promoted. As a result, a high density optical recording medium such as High-Definition DVD (HD DVD) or Blu-Ray Disc (BD) has become available in the market, for example.

When such an optical recording medium is read or written, it is normal to use an optical pickup device that projects a light beam to the optical recording medium so that information can be reproduced or recorded on the medium. A numerical aperture (NA) of an objective lens and a wavelength of a light source that are used for the optical pickup device have different values in accordance with a type of the optical recording medium. For example, an objective lens having an NA of 0.50 and a light source having a wavelength of 780 nm are used for a CD, an objective lens having an NA of 0.65 and a light source having a wavelength of 650 nm are used for a DVD, an objective lens having an NA of 0.65 and a light source having a wavelength of 405 nm are used for an HD DVD, and an objective lens having an NA of 0.85 and a light source having a wavelength of 405 nm are used for a BD.

Since an NA of an objective lens and a wavelength have different values in accordance with a type of the optical recording medium in this way, it is possible to use different optical pickup devices for different optical recording media. However, it is more convenient to use a single optical pickup device that can read and write on a plurality of optical recording media. Many of such aberration correcting devices have been already developed. Among them, there is an aberration correcting device that can read and write information on a plurality of types of optical recording media with a single objective lens as described in JP-A-2001-273663, for example.

In the case where a plurality of types of optical recording media are supported by a single objective lens, even if the objective lens is adjusted for one type of optical recording medium so that spherical aberration is not generated, the spherical aberration may be generated when information is reproduced on another type of optical recording medium. Therefore, as described in JP-A-2001-273663, it is a common method to dispose a liquid crystal panel (a liquid crystal element) in the optical pickup device and to control a voltage to be applied to the liquid crystal element so that the spherical aberration can be corrected. Furthermore, a type of the liquid crystal element that is disposed for this purpose is disclosed in JP-A-2001-273663 and other documents, in which two transparent electrodes that form the liquid crystal element are divided into a plurality of areas in a concentric manner, and voltages that are applied to the areas of the divided transparent electrode are controlled so that the spherical aberration is corrected.

In addition, JP-A-09-304748 discloses another aberration correcting device in which a plurality of concentric ring-like transparent electrodes are disposed on the upper and the lower sides of the liquid crystal element, and the transparent electrodes on one of the upper and the lower sides are formed narrower than the transparent electrodes on the other side in a asymmetric manner. According to the aberration correcting device described in JP-A-09-304748, diffraction efficiency of a light beam that passes through the liquid crystal element can be improved compared to the case where the transparent electrodes on the upper and the lower sides have the same shape.

In addition, JP-A-2005-275185 discloses another aberration correcting device in which transparent electrodes on the upper and the lower sides of the liquid crystal element have different shapes, so that a plurality of types of aberration corrections can be performed individually or simultaneously with a single liquid crystal element while reducing influence of diffraction scattered light as much as possible. The aberration correcting device described in JP-A-2005-275185 has a liquid crystal element including first and second transparent substrates with inner transparent electrodes sandwiching a liquid crystal layer, and at least one of the transparent electrodes has a multilayered electrode structure in which different aberration correcting patterns are laminated. Thus, a plurality of types of aberration corrections can be performed individually or simultaneously. Therefore, it can support various types of aberration corrections in accordance with an aberration correcting patterns to be used.

However, when using the structure described in JP-A-09-304748 or JP-A-2005-275185, a structure of the liquid crystal panel becomes complicated, and further manufacturing cost of the liquid crystal panel is increased. In addition, although the shapes of the transparent electrodes on the upper and the lower sides of the liquid crystal element are disclosed, but respective voltage values to be applied to the opposing transparent electrodes are not disclosed or suggested in any of the above-mentioned documents.

As an idea, if it is accepted to correct aberration generated with respect to a plurality of types of optical recording media to a certain degree but not completely, it is possible to reduce the number of divisions of the transparent electrode on the divided side of the liquid crystal element, the number of wires connected to the transparent electrodes, and the numbers of electrodes and wires provided to a circuit board for controlling the liquid crystal element. However, this reduction has its own limitation.

## SUMMARY OF THE INVENTION

An object of the present invention is to provide an aberration correcting device having transparent electrodes of different shapes on the upper and lower sides of the liquid crystal element so that aberration can be corrected appropriately, in which potentials to be applied to the upper and the lower transparent electrodes are changed for each set of opposed transparent electrodes so that the aberration can be corrected more properly, enabling device to be produced in a compact size and less expensively.

To achieve the object described above, an aberration correcting device of the present invention includes an aberration correcting device comprising: a liquid crystal unit including a plate-like first transparent electrode that is divided into first split electrodes of a first number of division in a concentric manner, a plate-like second transparent electrode that is divided into second split electrodes of a second number of division in a concentric manner, and liquid crystal that is sandwiched between the first transparent electrode and the second transparent electrode for generating a phase difference in an incident light beam corresponding to potentials applied to the first and the second split electrodes; a lens unit for condensing a light beam after passing through the liquid crystal unit onto a predetermined focal position; a drive unit for applying a predetermined potential to each of the first split electrodes and the second split electrodes so that aberration of the light beam can be corrected; and a control unit for controlling the drive unit, wherein the second number of division is larger than the first number of division, one of the first split electrodes, a plurality of second split electrodes corresponding to said one of the first split electrodes, and the liquid crystal sandwiched between said one of the first split electrodes and the second split electrodes constitute a segment, and the control unit includes a potential calculating portion that calculates a potential to be applied to each of the first split electrodes and the second split electrodes, and a second transparent electrode controlling portion that determines a potential to be applied to each of the second split electrodes so that a difference between phase correction quantities that are given to a certain segment and a segment adjacent thereto becomes smaller than a value obtained in a case in which a common potential is applied to all of the second split electrodes.

According to the aberration correcting device of the present invention, the phase correction quantity corrected by the entire liquid crystal element can be made closer to an ideal correction quantity of phase. Thus, aberration that is generated in an optical storage medium can be reduced, and the aberration correcting device that can easily correct the aberration appropriately can be provided.

In the aberration correcting device of the present invention, the liquid crystal unit includes: a first area in which the phase correction quantity increases as the radius increases from the inside toward the outside along the radius of the first transparent electrode having a circular shape; and a second area in which the phase correction quantity becomes a maximum value, and a third area in which the phase correction quantity decreases as the radius increases, wherein the second transparent electrode controlling portion is adapted to: make a difference between a maximum value among phase correction quantities by a plurality of second split electrodes in a certain segment and a reference correction quantity by the second split electrodes be smaller than a difference of the phase correction quantity by the first split electrodes between the certain segment and a next segment in a direction in which the radius increases in the first area; make phase correction quantities by a plurality of second split electrodes in a certain segment be equal to the reference correction quantity by the second split electrodes respectively in the second area; and make a difference between a maximum value among phase correction quantities by a plurality of second split electrodes in a certain segment and the reference correction quantity by the second split electrodes be smaller than a difference of the phase correction quantity by the first split electrodes between the certain segment and a next segment in a direction in which the radius decreases in the third area.

Since fine corrections are performed by the second split electrodes for each of the correction areas having different characteristics, the phase correction quantity by the entire liquid crystal element can be made closer to an ideal correction quantity of phase. With this arrangement, it is possible to reduce aberration that is generated in an optical storage medium and provide the aberration correcting device that can easily correct the aberration appropriately.

Also, in the aberration correcting device of the present invention, the second transparent electrode controlling portion is adapted to: calculate a difference of phase correction quantities by the first split electrodes between a certain segment and a next segment in a direction in which the radius increases and divide the difference thus obtained by the number of second split electrodes in the certain segment so as to make the result value be a difference of phase correction quantities between second split electrodes adjacent to each other in the certain segment in the first area; make phase correction quantities by a plurality of second split electrodes in a certain segment be equal to the reference correction quantity by the second split electrodes respectively in the second area; and calculate a difference of phase correction quantities by the first split electrodes between a certain segment and a next segment in a direction in which the radius decreases and divide the difference thus obtained by the number of second split electrodes in the certain segment so as to make the result value be a difference of phase correction quantities between second split electrodes adjacent to each other in the certain segment in the third area.

According to another aspect of the aberration correcting device of the present invention, fine corrections are performed in accordance with the number of second split electrodes in the segment. Therefore, the phase correction quantity by the entire liquid crystal element can be made closer to an ideal correction quantity of phase. Thus, it is possible to reduce the aberration that is generated in an optical storage medium and provide the aberration correcting device that can easily correct aberration appropriately.

Also, in the aberration correcting device of the present invention, the second transparent electrode controlling portion is adapted to: calculate a difference ($\Delta Va(m)$) of phase correction quantities by the first split electrodes between a certain segment (m) and a next segment (m+1) in a direction in which the radius increases and substitute the calculated value into the following equation so as to obtain a phase correction quantity (n+p-1) by the second split electrodes in the certain segment (m); $Vb(n+p-1) = (\Delta Va(m)/x)(p-1) + Vb(0)$, where n is a number of the second split electrode corresponding to a certain segment (m), p is a p-th second split electrode in one segment, x is the number of the second split electrodes corresponding to one first split electrode, and Vb(0) is a reference correction quantity by the second split electrodes; make phase correction quantities by a plurality of second split electrodes in a certain segment (m) be equal to the reference correction quantity by the second split electrodes respectively in the second area; and calculate a difference ($\Delta Va(m)$) of phase correction quantities by the first split electrodes between a certain segment (m) and a next segment (m+1) in a direction in which the radius decreases and substitute the calculated value into the following equation so as to obtain a phase correction quantity (n+p-1) by the second split electrodes in the certain segment (m), $Vb(n+p-1) = (\Delta Va(m)/x)(x-p) + Vb(0)$.

As described above, according to the aberration correcting device of the present invention, it is possible to determine a numerically appropriate correction quantity in accordance with the area to which the segment belongs and the number of second split electrodes in the segment. Therefore, it is possible to use a computer such as a micro processor for control and control the computer with a program, so that time and cost required for designing such complicated circuits can be reduced.

**BRIEF DESCRIPTION OF THE DRAWINGS**

Fig. 1 is a block diagram showing an example of a disc player according to the present invention.
Fig. 2 is a block diagram showing an example of an optical system of an optical pickup device equipped with an aberration correcting device according to the present invention.
Fig. 3 is a cross sectional schematic diagram for explaining a structure of a liquid crystal element.
Fig. 4A is a top view showing an example of an electrode pattern of a first transparent electrode.
Fig. 4B is a cross section cut along the line Z1'-Z1' in Fig. 4A.
Fig. 5A is a top view showing an example of an electrode pattern of a second transparent electrode.
Fig. 5B is a cross section cut along the line Z2'-Z2' in Fig. 5A.
Fig. 6 is a block diagram showing a positional relation between the first transparent electrode and the second transparent electrode formed in patterns.
Fig. 7 is a block diagram showing an example of a structure for setting potentials to the first transparent electrode and the second transparent electrode.
Fig. 8 is a diagram of a table showing an example of set values of the potentials to be applied to the first transparent electrode.
Fig. 9 is a flowchart showing a process flow of calculating set values of the potentials to be applied to the second transparent electrode.
Fig. 10A is a graph showing an example of a relationship between a radius of the liquid crystal element and a correction quantity of phase to be corrected.
Fig. 10B is a graph showing an example of a relationship between a radius of the liquid crystal element and a phase correction quantity with a group of electrodes A.
Fig. 10C is a graph showing an example of a relationship between a radius of the liquid crystal element and a phase correction quantity with a group of electrodes B.

Fig. 11 is a graph showing an example of a relationship between a phase correction quantity and a drive voltage of the liquid crystal element.

**DETAILED DESCRIPTION OF THE PREFERRED EMBODIMENTS**

Hereinafter, embodiments of the present invention will be described with reference to the attached drawings. Note that the embodiments described here are merely examples, and the present invention is not limited to the embodiments described here.

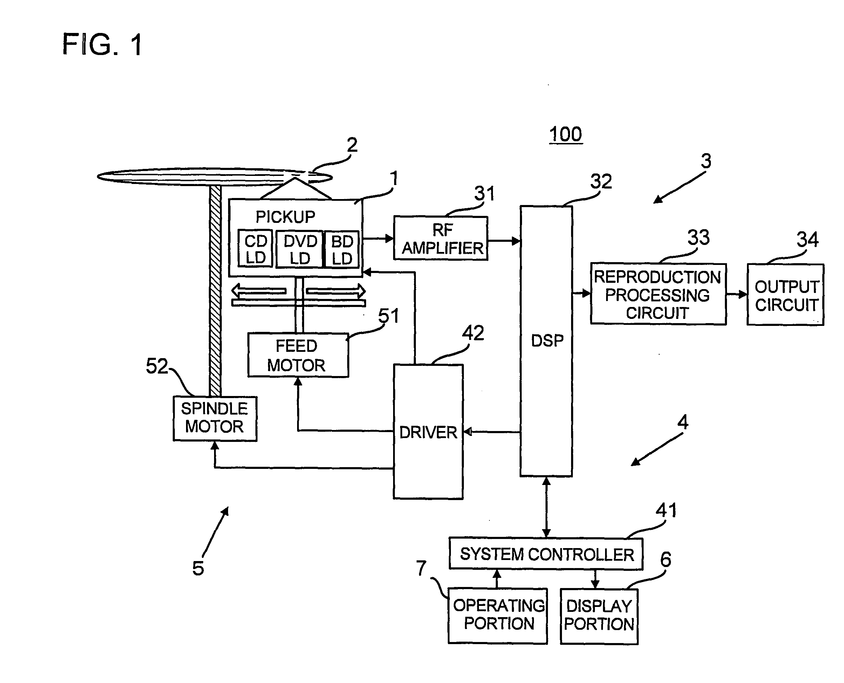

Fig. 1 is a block diagram showing an example of a disc player according to the present invention. A disc player 100 (corresponding to an information reproducing apparatus) is equipped with an optical pickup device 1 according to the present invention, an output device 3, an instruction device 4, a driving device 5, a display portion 6, and an operating portion 7.

The optical pickup device 1 projects a light beam to an optical recording medium 2 (CD, DVD, or BD) so as to read various information such as audio information and image information recorded on the optical recording medium 2.

The output device 3 converts the information such as audio information and image information from the optical pickup device 1 into sounds and images, so as to deliver them to a speaker and a monitor (not shown). The output device 3 includes an RF amplifier 31, a digital signal processor (DSP) 32, a reproduction processing circuit 33, and an output circuit 34.

The RF amplifier 31 amplifies information such as audio information and image information from the optical pickup device 1. The A DSP32 (corresponding to a computer, a control unit, and a part of an aberration correcting device) and a reproduction processing circuit 33 performs various types of information processing for reproduction (such as image processing) on the information from the RF amplifier 31. The output circuit 34 performs a DA conversion process and the like on the information from the reproduction processing circuit 33 for delivering it to the speaker and the monitor (not shown).

The instruction device 4 controls operations of the optical pickup device 1 and the driving device 5 based on an operational instruction received from the operating portion 7. The instruction device 4 includes a system controller 41 and a driver 42. The system controller 41 receives information from the operating portion 7 and transmits it to the DSP32, and it also transmits information from the DSP32 to the display portion 6. The driver 42 (a drive unit, a part of a medium driving device and a part of a moving device) controls operations of the optical pickup device 1 and the driving device 5 based on instructions from the DSP 32.

The driving device 5 is equipped with a feed motor 51 and a spindle motor 52. The feed motor 51 (corresponding to a part of the moving device) moves the optical pickup device 1 in the radial direction of the optical recording medium 2 based on an instruction from the driver 42. The spindle motor 52 (corresponding to a part of the medium driving device) drives the optical recording medium 2 to rotate based on an instruction from the driver 42.

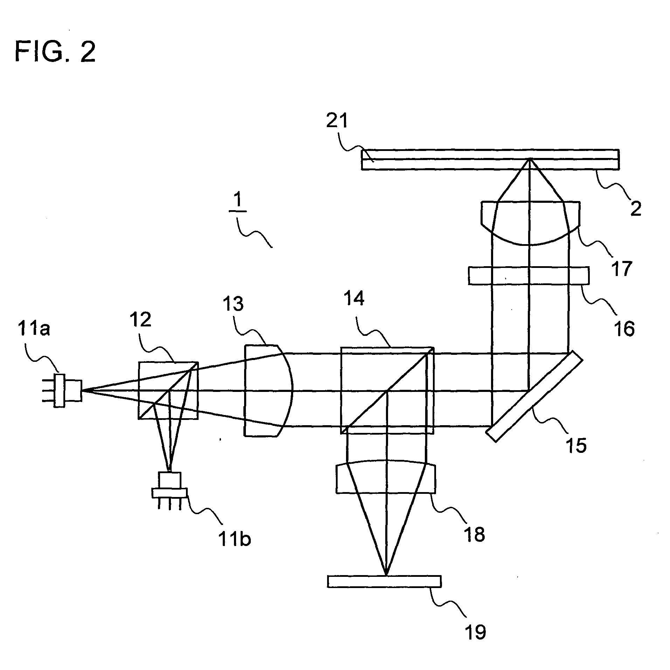

Fig. 2 is a schematic diagram that shows an example of the embodiment of the optical pickup device equipped with the liquid crystal element of the present invention and shows an optical system of the optical pickup device. Numeral 1 is the optical pickup device that projects a light beam onto two types of optical recording media 2 including a DVD and a BD and receives a reflection light, so as to read information recorded on a recording surface 21 of the optical recording medium 2 and projects a light beam onto the optical recording medium 2 so as to write information on the recording surface 21. Note that types and the number of types of the optical recording media 2 on which information can be read and written with the optical pickup device 1 are not limited to the types and the number shown in the present embodiment but can be modified variously within the scope of the present invention without deviating from it.

This optical pickup device 1 is equipped with a first light source 11a, a second light source 11b, a dichroic prism 12, a collimator lens 13, a beam splitter 14, an upward-directing mirror 15, a liquid crystal element 16, an objective lens 17, a detection lens 18 and a photodetector 19. Hereinafter, detail of each optical member of the optical pickup device 1 will be described.

The first light source 11 a is a semiconductor laser that is capable of emitting a light beam of a 650 nm band supporting a DVD, while the second light source 11b is a semiconductor laser that is capable of emitting a light beam of a 405 nm band supporting a BD. Although the semiconductor laser that emits only a light beam of a single wavelength is used for each of the first and second light sources 11 a and 11b in the present embodiment, the present invention is not limited to this structure. For example, it is possible to use a two-wavelength integrated semiconductor laser that has two light emission points so that two light beams of different wavelengths can be emitted.

The dichroic prism 12 passes the light beam emitted from the first light source 11 a for emitting a light beam for a DVD, while it reflects the light beam emitted from the second light source 11b for emitting a light beam for a BD. Then, the optical axis of the light beam emitted from the first light source 11 a matches the optical axis of the light beam emitted from the second light source 11 b. The light beam that passed through the dichroic prism 12 or was reflected by the same is sent to the collimator lens 13.

The collimator lens 13 converts the light beam that passed through the dichroic prism 12 into parallel rays.

Here, the parallel rays mean light in which all the optical paths of the light beams emitted from the first light source 11 a and the second light source 11 b are substantially parallel with the optical axis. The light beam that is converted into the parallel rays by the collimator lens 13 is sent to the beam splitter 14.

The beam splitter 14 works as a light separating element that separates an incident light beam. It passes the light beam from the collimator lens 13 and leads it to the optical recording medium 2, while it reflects reflection light reflected by the optical recording medium 2 and leads it to the photodetector 19 side. The light beam that passed through the beam splitter 14 is sent to the upward-directing mirror 15.

The upward-directing mirror 15 reflects the light beam that passed through the beam splitter 14 and leads it to the optical recording medium 2. The upward-directing mirror 15 is tilted relative to the optical axis of the light beam from the beam splitter 14 by 45 degrees, so the optical axis of the light beam reflected by the upward-directing mirror 15 is substantially perpendicular to the recording surface 21 of the optical recording medium 2. The light beam reflected by the upward-directing mirror 15 is sent to the liquid crystal element 16.

The liquid crystal element 16 applies a voltage to liquid crystal sandwiched between transparent electrodes (not shown) so as to control a change in a refractive index of liquid crystal by utilizing a property of molecules of the liquid crystal changing their orientation direction, so that a phase of the light beam that passes through the liquid crystal element 6 can be controlled. Since this liquid crystal portion 16 is disposed, the spherical aberration that is generated due to a difference in thickness of a protective layer for protecting the recording surface 21 of the optical recording medium 2 or the like can be corrected. In the present embodiment, the spherical aberration can be corrected with respect to the light beam emitted from the light source for a DVD (the first light source 11 a). Note that detail of the liquid crystal element 16 will be described later. The light beam that passed through the liquid crystal portion 16 is sent to the objective lens 17.

The objective lens 17 condenses the light beam that passed through the liquid crystal portion 16 onto the recording surface 21 of the optical recording medium 2. The objective lens 17 in the present embodiment is designed so that spherical aberration is not generated in the light beam emitted from the light source for a BD (the second light source 11 b). In this case, spherical aberration is generated in the light beam that is emitted from the light source for a DVD (the first light source 11a) and passes through the objective lens 17. Therefore, the above-mentioned liquid crystal portion 16 is disposed in the optical system of the optical pickup device 1 so that the spherical aberration can be corrected. In addition, the objective lens 17 is adapted to be capable of moving in the vertical direction and in the horizontal direction in Fig. 2 when it is driven by an objective lens actuator (not shown), and the position thereof is controlled based on a focus servo signal and a tracking servo signal.

Note that the liquid crystal portion 16 is also mounted on the objective lens actuator in the present embodiment so that it can be moved together with the objective lens 17. However, it is not always necessary to mount the liquid crystal portion 16 on the objective lens actuator, but the structure can be modified in accordance with a structure of the optical system.

The reflection light reflected by the optical recording medium 2 passes through the objective lens 17 and the liquid crystal portion 16 in this order and is reflected by the upward-directing mirror 15. Then, the reflection light is further reflected by the beam splitter 14 and is condensed by the detection lens 18 onto a light receiving portion (not shown) that is provided to the photodetector 19.

The photodetector 19 converts the received light information into an electric signal and delivers it to the RF amplifier (not shown) or the like, for example. Then, this electric signal is used as a reproduced signal of data recorded on the recording surface 21 and further as a servo signal for performing focus control and tracking control.

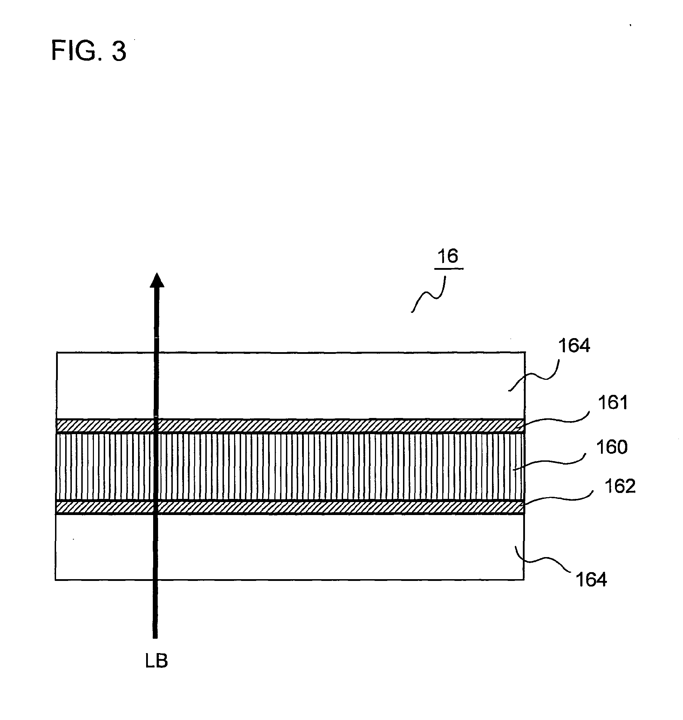

Next, a structure of the liquid crystal portion 16 that is provided to the optical pickup device 1 will be described. Fig. 3 is a schematic diagram for explaining a structure of the liquid crystal element 16 that is provided to the optical pickup device 1. As shown in Fig. 3, the liquid crystal portion 16 includes liquid crystal 160, two transparent electrodes 161 and 162 (a first transparent electrode 161 and a second transparent electrode 162) that sandwich the liquid crystal 160, two glass plates 164 that sandwich the portion composed of the liquid crystal 160 and the transparent electrodes 161 and 162. Note that the arrow LB in Fig. 3 indicates the traveling direction of the laser beam.

The liquid crystal 160 has a characteristic of altering its refractive index when a voltage is applied between both ends so that an orientation of liquid crystal molecules inside it changes. As a result, the light beam that passes through the inside of the liquid crystal will generate a phase difference corresponding to a change in a difference of optical paths according to the change in the refractive index of the liquid crystal 160. The transparent electrodes 161 and 162 are made of ITO (indium tin oxide) or the like and are optically transparent. In addition, the transparent electrodes 161 and 162 are formed and carried on the glass plate 164. Note that wires (not shown) are drawn out from the transparent electrodes 161 and 162 and are connected electrically to electrodes disposed on a circuit board (not shown) for controlling voltages to be applied to the liquid crystal element 16 (hereinafter referred to as a circuit board simply).

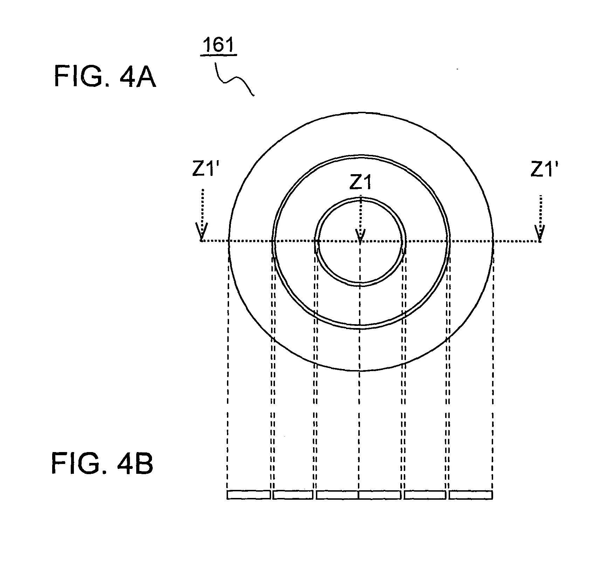

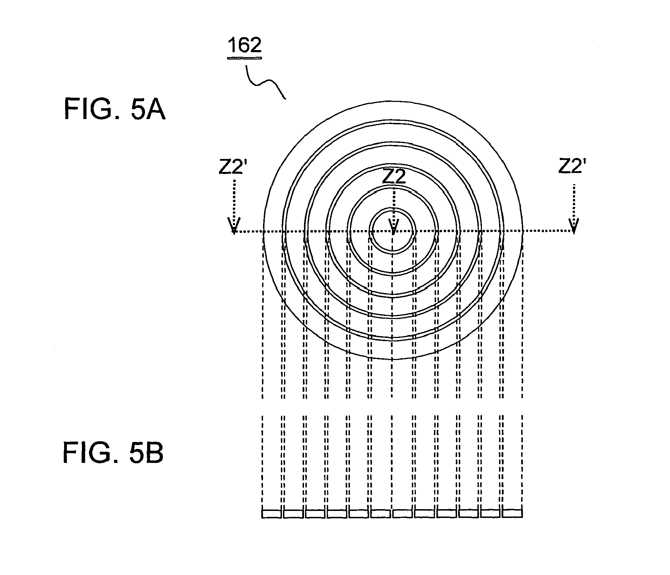

Fig. 4A is a top view showing an example of an electrode pattern of the first transparent electrode 161 of the liquid crystal element 16. In addition, Fig. 4B is a cross section of the first transparent electrode 161 cut along the line Z1'-Z1'. In the same manner, Fig. 5A is a top view showing an example of an electrode pattern of the second transparent electrode 162 of the liquid crystal element 16, and Fig. 5B is a cross section of the second transparent electrode 162 cut along the line Z2'-Z2'.

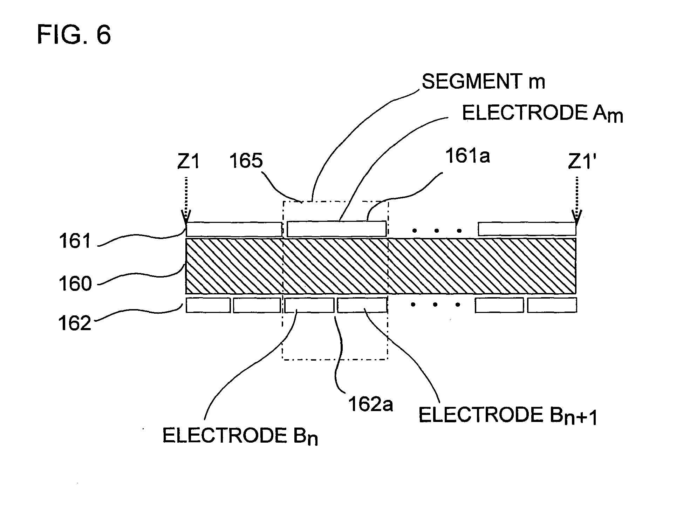

Fig. 6 is a diagram showing a positional relation between the first transparent electrode 161 and the second transparent electrode 162 that are formed in patterns. Fig. 6 is a side sectional view of the liquid crystal element 16 cut along the line Z1-Z1' in Fig. 4A. As shown in Fig. 6, the first transparent electrode 161 is made up of a plurality of electrodes A 161 a. In the same manner, the second transparent electrode 162 is made up of a plurality of electrodes B 162a. In the example shown in Fig. 6, one electrode A 161 a is opposed to two electrodes B 162a. The section including one electrode A 161 a and two electrodes B 162a opposed to each other is referred to as a segment 165.

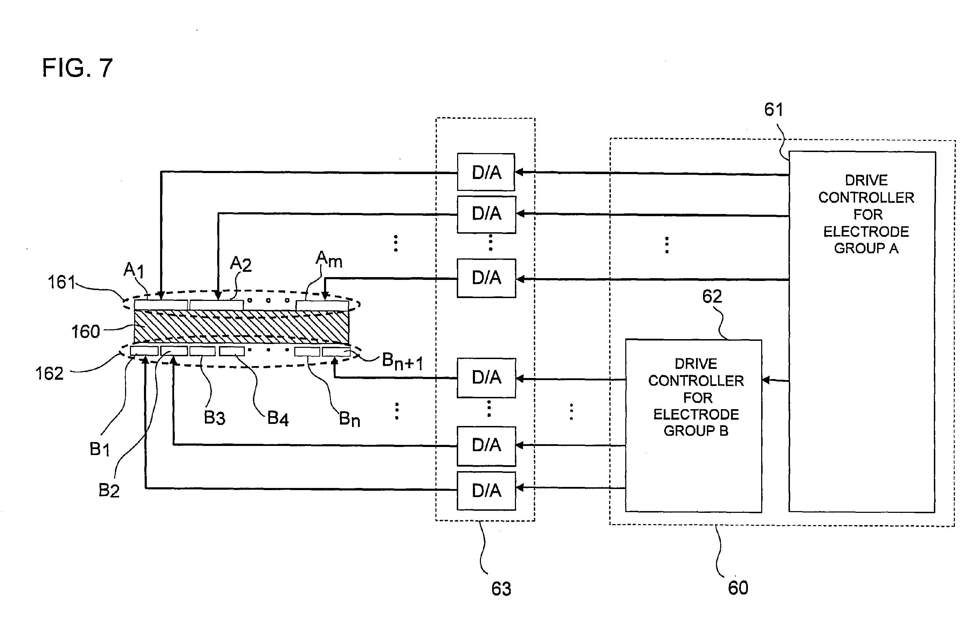

Next, a device structure for applying a drive voltage (potential) to the liquid crystal element 16 in the present embodiment will be described. Fig. 7 is a block diagram showing schematically members and circuits that are connected electrically to the liquid crystal element 16. The device for applying the drive voltage to the liquid crystal element 16 includes a liquid crystal controller 60, a drive controller for electrode group A 61, a drive controller for electrode group B 62, and a liquid crystal driver 63 made up of a plurality of D/A converter circuits (abbreviated as D/A in Fig. 7).

As shown in Figs. 6 and 7, when the segment 165 that is closest to the center of the liquid crystal element 16 (the position Z1) is referred to as a first segment, a segment 165 that is located on a position away from the first segment toward the outer edge portion (the position Z1') by a certain number is referred to as an m-th segment. The electrode A 161 a disposed in the m-th segment is referred to as an electrode Am, and the electrodes B 162a that are opposed to the electrode Am in the m-th segment are referred to as electrodes Bn and Bn+1. Although there are two electrodes B 162a that are opposed to the electrode A 161a in this example, it is possible that other numbers of electrodes B 162a are arranged to be opposed to the electrode A 161 a.

The liquid crystal controller 60 is a controller that calculates values of the drive voltages for driving electrodes of the first transparent electrode 161 and the second transparent electrode 162 for each electrode and supplies a control signal to the liquid crystal driver 63. When the liquid crystal driver 63 receives the control signal, it transmits drive signals to the electrode based on contents of the received control signal. Although one D/A converter circuit is connected to one electrode in this example, it is also possible to connect one D/A converter circuit to a plurality of electrodes so that the identical drive signal is supplied to the plurality of electrodes.

The liquid crystal controller 60 is made up of a drive controller for electrode group A 61 that calculates drive voltage values for driving the first transparent electrode 161 and a drive controller for electrode group B 62 that calculates drive voltage values for driving the second transparent electrode 162. The drive controller for electrode group A 61 determines values of the drive voltages to be applied to the electrodes based on conditions such as a type of the loaded optical recording medium 2, a current layer of the optical recording medium 2 (in the case of a multilayered disc) to which the light beam is projected by the optical pickup device 1, and a temperature of the liquid crystal element 16.

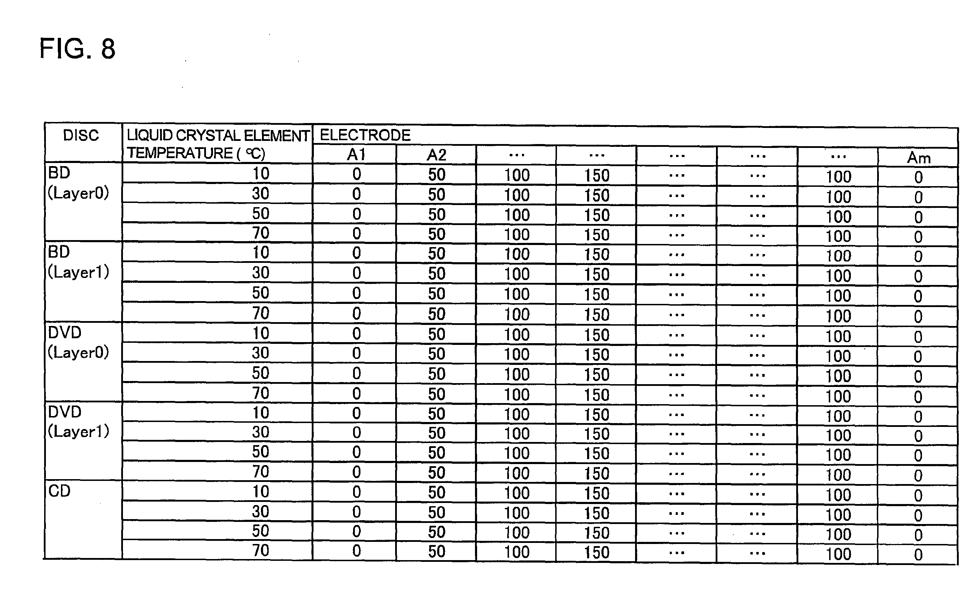

Fig. 8 shows an example of a set value table that is looked up when the drive controller for electrode group A 61 calculates the drive voltage values (all the values are merely examples). It stores set values for driving the electrodes A with respect to types of the disc (the optical recording medium 2), current layers, and temperatures of the liquid crystal element. For example, if a type of the disc is a BD, a current layer is the Layer 0, and a temperature of the liquid crystal element is 30 degrees, the drive voltage values to be applied to the electrodes A are obtained by looking up data on the second line in the table. In this case, the obtained values are 0 volt for the electrode A1, 50 volts for the electrode A2, and so on.

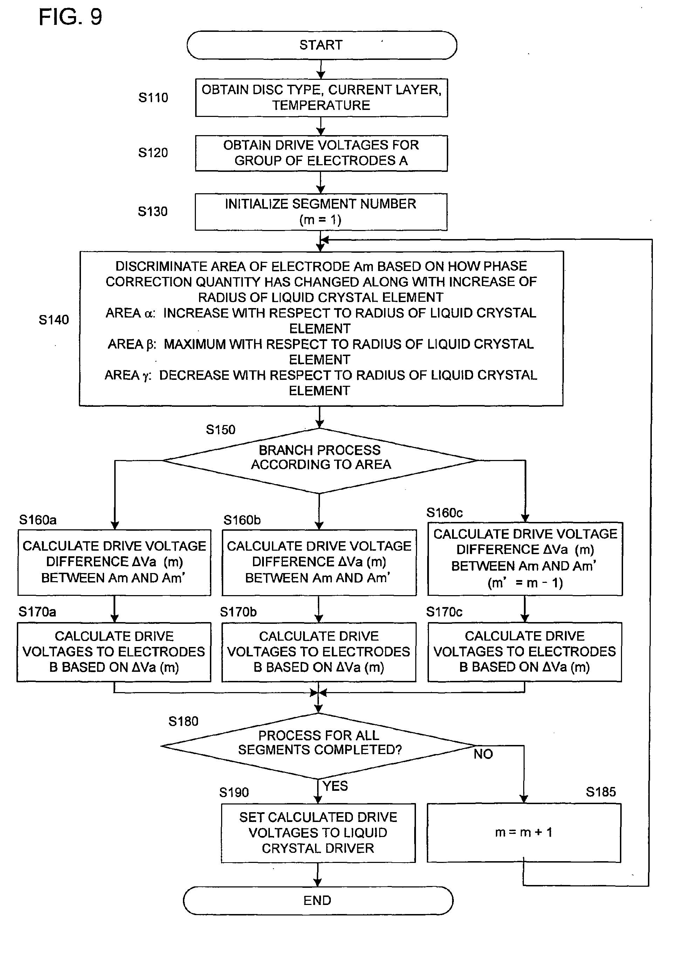

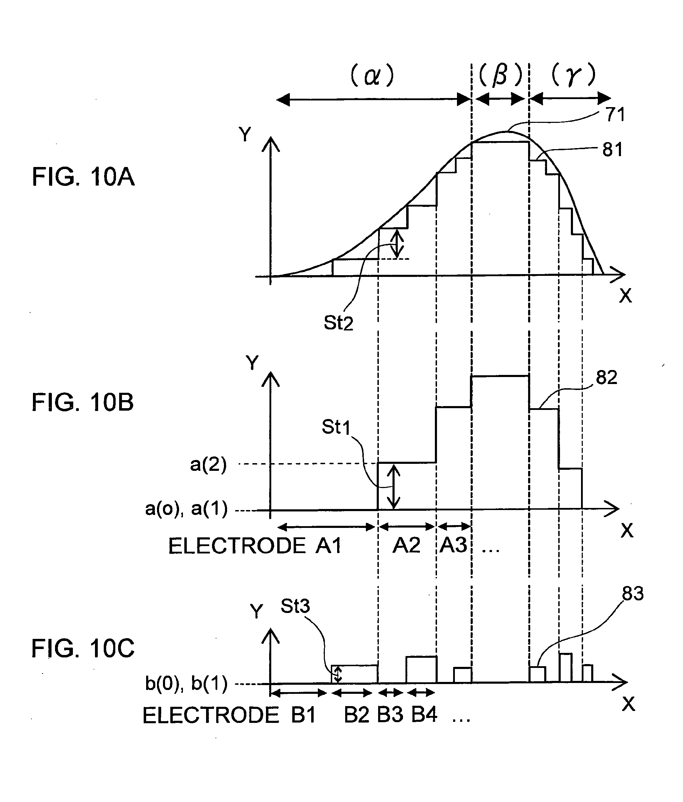

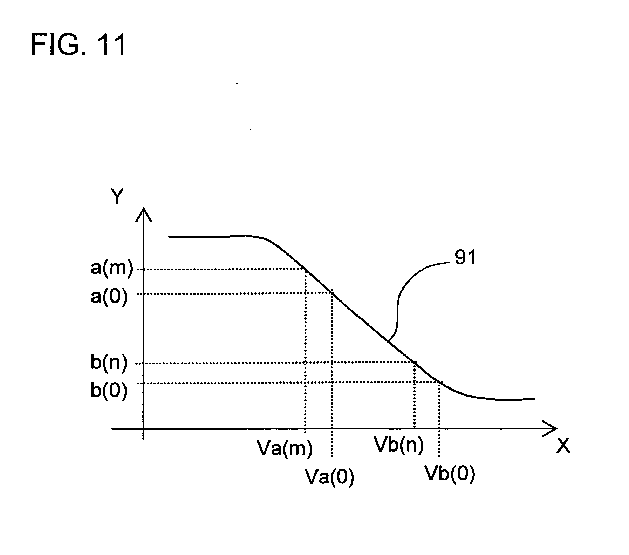

Next, a processing method for the drive controller for electrode group B 62 to calculate drive voltage values to be applied to the electrodes will be described with reference to the flowchart shown in Fig. 9. Concerning a decision process of the drive voltages for the group of electrodes B, the processing method is different for each electrode depending on the area where the electrode Bn and the electrode Bn+1 are located. Therefore, division of the area that becomes a factor of branching of the process will be described first with reference to Figs. 10A-10C and 11.

Figs. 10A, 10B and 10C are diagrams showing a relationship between a radius of the liquid crystal element and correction quantity of phase to be corrected, in which the X axis indicates a radius of the liquid crystal element and the Y axis indicates a correction quantity of phase. The graph 71 in Fig. 10A shows a change of the correction quantity of phase to be corrected according to a change of the radius of the liquid crystal element. The graph 81 shows a sum of the graph 82 and the graph 83 that will be described below, which is phase correction quantity of the entire liquid crystal element 16.

The graph 82 in Fig. 10B shows phase correction quantity by the group of electrodes A. The correction quantity of phase that is corrected by the electrode Am is represented by a(m), and the origin on the Y axis indicates a(0) that is a reference quantity of the phase correction quantity by the group of electrodes A. In addition, the graph 83 in Fig. 10C shows a phase correction quantity by the group of electrodes B. In the same manner as the graph 82, the correction quantity of phase that is corrected by the electrode Bn is represented by b(n), and the origin on the Y axis indicates b(0) that is a reference quantity of the phase correction quantity by the group of electrodes B.

As shown in Figs. 10A, 10B and 10C, each graph can be divided into three areas. In the area $\alpha$, the phase correction quantity by the group of electrodes A increases as the radius of the liquid crystal element increases (the graph 81 shows an increase). In the area β, the phase correction quantity by the group of electrodes A shows a maximum, and only one electrode A is located in this area β actually. In the area γ, the phase correction quantity by the group of electrodes A decreases as the radius of the liquid crystal element increases (the graph 81 shows a decrease). The processing method for the drive controller for electrode group B 62 to calculate the drive voltage values with respect to the electrode Bn and the electrode Bn+1 are different for each of the areas.

Fig. 11 shows a relationship between the phase correction quantity and the drive voltage of the liquid crystal element, in which the X axis indicates the drive voltage while the Y axis indicates the phase correction quantity. The graph 91 in Fig. 11 shows a change in the correction quantity of phase to be corrected due to a change in the drive voltage. In Fig. 11, Va(m) denotes the voltage to be applied to the electrode Am, while Vb(n) denotes the drive voltage to be applied to the electrode Bn. In addition, Va(0) indicates a drive voltage for performing a(0) phase correction in Fig. 10B and is the reference quantity of the drive voltage. In the same manner, Vb(0) indicates a drive voltage for performing b(0) phase correction in Fig. 10C.

Next, the process flow for the drive controller for electrode group A 61 and the drive controller for electrode group B 62 to calculate drive voltage values to be applied to the electrodes will be described with reference to a flowchart shown in Fig. 9. First, the drive controller for electrode group A 61 obtains a disc type, a current layer, and a temperature of the liquid crystal element (S110), and based on the information, it obtains the drive voltage values to be applied to the electrodes of the group of electrodes A from the set value table shown in Fig. 8 (S 120).

Note that the group of electrodes A are a set of electrodes A 161 a shown in Fig. 6 and they include an electrode A1 that is the electrode A 161 a closest to the center of the liquid crystal element 16 (the position Z1 in Fig. 4A), and an electrode A2, an electrode A3, ... an electrode Am (m is a natural number of one or larger) continuing from the electrode A1 toward the outer edge portion (the position Z1' in Fig. 4A). Since one electrode A161a is disposed with respect to one segment 165, an electrode A disposed in a given segment m is referred to as an electrode Am.

When drive voltages to be applied to the group of electrodes A are determined in S 120, the drive controller for electrode group A 61 finishes the process, and the process flow goes to a process performed next by the drive controller for electrode group B 62. The drive controller for electrode group B 62 performs an initialization of a segment number m (m = 1) (S130). Then, it is determined how the phase correction quantity of the electrode Am has changed along with the increase of the radius of the liquid crystal element (the distance between the position Z1 and the electrode Am in Fig. 4A) by using the graph shown in Fig. 10B so as to discriminate the area in which the electrode Am is disposed (among areas α to γ) (S140). Then, based on the determined area, the process flow branches to a predetermined routine in which the following process is performed (S150).

If the area in which the electrode Am is disposed is the area α, using a parameter m' for calculation, a value of m + 1 is substituted into the parameter m'. Then, a drive voltage difference ΔVa(m) between the drive voltages of the electrode Am and the electrode Am' is calculated by using the following equation (1) (S 160a).

$$\Delta Va(m) = Va(m') - Va(m) \qquad ....(1)$$

Based on the obtained ΔVa(m), the drive voltages (denoted by Vb(n) and Vb(n+1), respectively) to be applied to the electrode Bn and the electrode Bn+1 that are opposed to the electrode Am are calculated by using the following equations (2) and (3) (S170a). Note that x is the number of the electrodes B that are opposed to one electrode A (x = 2 in this embodiment).

$$Vb(n) = Vb(0) \qquad ....(2)$$

$$Vb(n+1) = \Delta Va(m)/x + Vb(0) \qquad ....(3)$$

Here, as understood from Fig. 10C, the voltages to be applied to the electrodes Bn are all the same Vb(0) for obtaining b(0) that is the reference quantity of the phase correction quantity by the group of electrodes B. In addition, if x is three or more, the following equation can be used for the equations (2) and (3).

$$Vb(n+p-1) = (\Delta Va(m)/x)(p-1) + Vb(0)$$

(where p is the p-th electrode B in one segment)

If the area in which the electrode Am is disposed is the area β, a value of m is substituted into the parameter m'. Then, a drive voltage difference $\Delta Va(m)$ between the drive voltages of the electrode Am and the electrode Am' is calculated by using the following equation (1) (S160b).

$$\Delta Va(m) = Va(m') - Va(m) \qquad ....(1)$$

Based on the obtained $\Delta Va(m) = 0$, the drive voltages (denoted by Vb(n) and Vb(n+1), respectively) to be applied to the electrode Bn and the electrode Bn+1 that are opposed to the electrode Am are calculated by using the following equations (2) and (3) (S170b).

$$Vb(n) = Vb(0) \qquad ....(2)$$

$$Vb(n+1) = \Delta Va(m)/x + Vb(0) \quad .... (3)$$

Here, since the equation (1) becomes "0" when the result is substituted, the equation (3) becomes "Vb(0)." In addition, also in the case where x is three or more, the equation (3) becomes "Vb(0)" in every case.

If the area in which the electrode Am is disposed is the area γ, a value of m- 1 is substituted into the parameter m'. Then, a drive voltage difference $\Delta a(m)$ between the drive voltages of the electrode Am and the electrode Am' is calculated by using the following equation (1) (S160c).

$$\Delta Va(m) = Va(m') - Va(m) \qquad ....(1)$$

Based on the obtained $\Delta Va(m)$, the drive voltages (denoted by Vb(n) and Vb(n+1), respectively) to be applied to the electrode Bn and the electrode Bn+1 that are opposed to the electrode Am are calculated by using the following equations (2') and (3') (S170c).

$$Vb(n) = \Delta Va(m)/x + Vb(0) \qquad ....(2')$$

$$Vb(n+1) = Vb(0) \qquad .... (3')$$

Here, as understood from Fig. 10C, the voltages to be applied to the electrodes Bn+1 are all the same Vb(0) for obtaining b(0) that is the reference quantity of the phase correction quantity by the group of electrodes B. In addition, if x is three or more, the following equation can be used for the equations (2') and (3').

$$Vb(n+p-1) = (\Delta Va(m)/x)(x-p) + Vb(0)$$

(where p is the p-th electrode B in one segment)

After the values of Vb(n) and Vb(n+1) are calculated by one of the three branch processes described above, the drive controller for electrode group B 62 checks whether or not the drive voltages have been calculated for electrodes B of every segment (S180). If the process is not completed for every segment, one is added to the parameter m (S185), and then the process flow goes to the above-mentioned process S140, in which the drive voltages for the electrodes B are calculated again. On the contrary, if the process is completed for every segment, the calculated drive voltage values are set in the liquid crystal driver 63 (S190), and this process is finished.

The action when the drive voltages are set for the electrodes of the liquid crystal element 16 by using the drive controller for electrode group A 61 and the drive controller for electrode group B 62 as described above will be described with reference to Figs. 10A-10C. If the same level of drive voltage is applied to every electrode B of the group of electrodes B as in the conventional method, a change step (St) of the phase correction quantity of the position corresponding to the electrode A1 and the electrode A2 becomes St1 (St1 = a(2) - a(1)) as shown by the graph 82 of Fig. 10B, for example.

On the other hand, in the above-mentioned embodiment of the present invention, the drive voltage that is calculated for each electrode B of the group of electrodes B is applied to each electrode B so that the change step of the phase correction quantity of the position corresponding to the electrode A1 and the electrode A2 becomes St2 (St2 = St1 - St3, where St3 = b(2)) as shown by the graph 81 of Fig. 10A, for example. In other words, the change step of the phase correction quantity can be reduced to a half, so it is possible to obtain the change step that is closer to a phase quantity to be corrected (graph 71). Thus, quantity of aberration that is generated by an optical storage medium can be reduced compared to the conventional structure.

Although Figs. 10A- 10C show a relationship between the position of each electrode and the phase correction quantity when the number x of the electrodes B that are opposed to one electrode A is two, the basic concept is the same if the number x of the electrodes B that are opposed to one electrode A is three or more. For example, the change step of the phase correction quantity by the electrode A1 and the electrode A2 is St1 as shown in Fig. 10B. Then, the maximum phase correction quantity among the phase correction quantities by the electrode B1, B2, ... Bx corresponding to the electrode A1 is denoted by Stmax, for example. This Stmax is set to a value smaller than St1, and similar control is performed with respect to other electrodes A and B. As a result, it is possible to obtain the change step that is closer to the phase quantity to be corrected (graph 71) concerning the graph 81 shown in Fig. 10A. Thus, quantity of aberration that is generated by the optical storage medium can be further reduced compared to the conventional structure.

Although the present invention is described with preferred embodiments and examples as described above, the present invention is not limited to these embodiments and examples but can be modified variously within the scope of its technical spirit.

For example, the present invention can be embodied by a structure in which a storage medium having program codes of software recorded thereon for realizing the functions of the above-mentioned embodiments is supplied to the disc player 100, and a computer (e.g., a CPU) reads out the program codes stored in the storage medium of the disc player 100 and executes the program codes.

In this case, the program codes read out from the storage medium realize the functions of the above-mentioned embodiments, and the storage medium storing the program codes constitutes the present invention.

Note that a flexible disc, a hard disk, an optical disc, an optical magnetic disk, an optical tape, a nonvolatile memory card, a ROM, or the like can be used as the storage medium for supplying the program codes, for example.

In addition, without limited to the structure in which the computer reads out the program codes and executes the same for realizing the functions of the above-mentioned embodiment, it is also possible to adopt a structure in which an OS (operating system) or the like working on the computer performs a part or a whole of the actual process based on instructions of the program codes, so that the functions of the above-mentioned embodiment can be realized by the process.

In addition, it is possible to adopt another structure in which the program codes read out from the storage medium are written on a memory of a functional expansion board or a functional expansion unit connected to the computer, and a CPU or the like of the functional expansion board or the functional expansion unit executes a part or a whole of the actual process based on instructions of the program codes so that the functions of the above-mentioned embodiment can be realized by the process. The above-mentioned embodiment can be realized not only by the above-mentioned examples but also by other various methods.

In addition, although the drive voltages to be applied to the electrode Bn and the electrode Bn+1 are calculated by using the equations (2) and (3), or equations (2') and (3') in the above-mentioned embodiments, the calculation method is not limited to the equations but can be modified as long as it satisfies the following conditional equation. If the electrode Am is disposed in the area $\alpha$ or $\beta$,

$$Vb(n+1) \leqq \Delta Va(m') \qquad\qquad ....(4)$$

$$Vb(n+1) - Vb(0) \leqq \Delta Va(m') - \Delta Va(m) \qquad ....(5)$$

If the electrode Am is disposed in the area $\gamma$,

$$Vb(n) \leqq \Delta Va(m') \qquad \qquad ....(4')$$

$$Vb(n) - Vb(0) \leqq \Delta Va(m') - \Delta Va(m) \qquad ....(5')$$

In addition, the D/A converter circuits of the liquid crystal driver 63 for driving the group of electrodes B equal to the number of electrodes B 162a (see Fig. 7), and the drive controller for electrode group B 62 calculates the drive voltage value individually for each of the electrodes B 162a in the above-mentioned embodiments. However, it is also possible to adopt such a processing method in which the same drive voltage value is applied to all or a part of the electrodes B 162a by calculating an average value of the drive voltage values for the electrodes B 162a, for example. In this case, the number of the D/A converter circuits of the liquid crystal driver 63 for the group of electrodes B can be reduced, so a cost necessary for the circuit and the device can be reduced.

In addition, although the number of phase shift areas for the group of electrodes A is six and the number of phase shift areas for the electrodes B that are opposed to the electrode A is two in the above-mentioned embodiment, the number of the phase shift areas is not limited to the above-mentioned number but can be modified variously within a range that enables correction of spherical aberration and satisfies requirements of a device size and manufacturing cost, for example.

For example, if the number of the phase shift area of the electrodes B that are opposed to the electrode A disposed in the area $\alpha$ is x, the voltage to be applied to the electrode B(p) that is the p-th electrode B in one segment may be calculated by the following equation (6).

$$Vb(p) = (\Delta Va(m)/x)(p-1) + Vb(0) \qquad ....(6)$$

Furthermore, although the liquid crystal element 16 is used for a purpose of correcting spherical aberration that is generated in a light beam for a DVD in the above-mentioned embodiment, the liquid crystal element 16 of the present invention can be used as a liquid crystal element for correcting spherical aberration that is generated in reading various optical recording media other than a DVD or as a liquid crystal element for correcting wave aberration other than spherical aberration. In addition, the present invention can be applied not only to the optical pickup device but also to other optical devices that need correction of aberration.

**Claims**

1. An aberration correcting device comprising:

   a liquid crystal unit including a plate-like first transparent electrode that is divided into first split electrodes of a first number of division in a concentric manner, a plate-like second transparent electrode that is divided into second split electrodes of a second number of division in a concentric manner, and liquid crystal that is sandwiched between the first transparent electrode and the second transparent electrode for generating a phase difference in an incident light beam corresponding to potentials applied to the first and the second split electrodes;
   a lens unit for condensing a light beam after passing through the liquid crystal unit onto a predetermined focal position;
   a drive unit for applying a predetermined potential to each of the first split electrodes and the second split electrodes so that aberration of the light beam can be corrected; and
   a control unit for controlling the drive unit,

   wherein the second number of division is larger than the first number of division,
   one of the first split electrodes, a plurality of second split electrodes corresponding to said one of the first split electrodes, and the liquid crystal sandwiched between said one of the first split electrodes and the second split electrodes constitute a segment, and
   the control unit includes a potential calculating portion that calculates a potential to be applied to each of the first split electrodes and the second split electrodes, and a second transparent electrode controlling portion that determines a potential to be applied to each of the second split electrodes so that a difference between phase correction quantities that are given to a certain segment and a segment adjacent thereto becomes smaller than a value obtained in a case in which a common potential is applied to all of the second split electrodes.

2. The aberration correcting device according to claim 1,
   wherein the liquid crystal unit includes:

   a first area in which the phase correction quantity increases as the radius increases from the inside toward the outside along the radius of the first transparent electrode having a circular shape; and
   a second area in which the phase correction quantity becomes a maximum value, and a third area in which the phase correction quantity decreases as the radius increases,

   wherein the second transparent electrode controlling portion is adapted to:

   make a difference between a maximum value among phase correction quantities by a plurality of second split electrodes in a certain segment and a reference correction quantity by the second split electrodes be smaller than a difference of the phase correction quantity by the first split electrodes between the certain segment and a next segment in a direction in which the radius increases in the first area;
   make phase correction quantities by a plurality of second split electrodes in a certain segment be equal to the reference correction quantity by the second split electrodes respectively in the second area; and
   make a difference between a maximum value among phase correction quantities by a plurality of second split electrodes in a certain segment and the reference correction quantity by the second split electrodes be smaller than a difference of the phase correction quantity by the first split electrodes between the certain segment and a next segment in a direction in which the radius decreases in the third area.

3. The aberration correcting device according to claim 1 or 2,
   wherein the second transparent electrode controlling portion is adapted to:

   calculate a difference of phase correction quantities by the first split electrodes between a certain segment and a next segment in a direction in which the radius increases and divide the difference thus obtained by the number of second split electrodes in the certain segment so as to make the result value be a difference of phase correction quantities between second split electrodes adjacent to each other in the certain segment in the first area;
   make phase correction quantities by a plurality of second split electrodes in a certain segment be equal to the reference correction quantity by the second split electrodes respectively in the second area; and
   calculate a difference of phase correction quantities by the first split electrodes between a certain segment and a next segment in a direction in which the radius decreases and divide the difference thus obtained by the number of second split electrodes in the certain segment so as to make the result value be a difference of phase correction quantities between second split electrodes adjacent to each other in the certain segment in the third area.

4. The aberration correcting device according to at least one of claims 1-3,
   wherein the second transparent electrode controlling portion is adapted to:

   calculate a difference ($\triangle Va(m)$) of phase correction quantities by the first split electrodes between a certain segment (m) and a next segment (m+1) in a direction in which the radius increases and substitute the calculated value into the following equation so as to obtain a phase correction quantity (n+p-1) by the second split electrodes in the certain segment (m);

$$Vb(n+p-1) = (\Delta Va(m)/x)(p-1) + Vb(0),$$

   where n is a number of the second split electrode corresponding to a certain segment (m), p is a p-th second split electrode in one segment, x is the number of the second split electrodes corresponding to one first split electrode, and Vb(0) is a reference correction quantity by the second split electrodes;
   make phase correction quantities by a plurality of second split electrodes in a certain segment (m) be equal to the reference correction quantity by the second split electrodes respectively in the second area; and
   calculate a difference ($\triangle Va(m)$) of phase correction quantities by the first split electrodes between a certain segment (m) and a next segment (m+1) in a direction in which the radius decreases and substitute the calculated value into the following equation so as to obtain a phase correction quantity (n+p-1) by the second split electrodes in the certain segment (m),

$$Vb(n+p-1) = (\Delta Va(m)/x)(x-p) + Vb(0).$$

5. An optical pickup device that projects a light beam onto an optical recording medium so as to perform at least one of reproducing information recorded on the optical recording medium and recording information on the optical recording medium,
wherein the optical pickup device is equipped with the aberration correcting device according to at least one of the preceding claims.

6. An information reproducing apparatus comprising:

an optical pickup device that is equipped with the aberration correcting device according to claim 1 and projects a light beam onto an optical recording medium so as to read information recorded on the optical recording medium;
a medium driving device that drives the optical recording medium to turn;
a moving device that moves the optical pickup device in a radial direction of the optical recording medium; and
an output device that obtains information recorded on the optical recording medium via the optical pickup device and reproduces the information.

7. An aberration correcting method of an aberration correcting device,
the aberration correcting device including:

a liquid crystal unit including a plate-like first transparent electrode that is divided into first split electrodes of a first number of division in a concentric manner, a plate-like second transparent electrode that is divided into second split electrodes of a second number of division in a concentric manner, and liquid crystal that is sandwiched between the first transparent electrode and the second transparent electrode for generating a phase difference in an incident light beam corresponding to potentials applied to the first and the second split electrodes; a lens unit for condensing a light beam after passing through the liquid crystal unit onto a predetermined focal position; a drive unit for applying a predetermined potential to each of the first split electrodes and the second split electrodes so that aberration of the light beam can be corrected; and a control unit for controlling the drive unit, wherein the second number of division is larger than the first number of division, and a segment is constituted by one of the first split electrodes, a plurality of second split electrodes corresponding to said one of the first split electrodes, and the liquid crystal sandwiched between said one of the first split electrodes and said plurality of second split electrodes,

the aberration correcting method comprising:

a first step of calculating a potential to be applied to each of the first split electrodes and the second split electrodes; and
a second step of determining a potential to be applied to each of the second split electrodes so that a difference between phase correction quantities that are given to a certain segment and a segment adjacent thereto becomes smaller than a value obtained in a case in which a common potential is applied to all of the second split electrodes.

8. The aberration correcting method according to claim 7,
wherein the liquid crystal unit includes:

a first area in which the phase correction quantity increases as the radius increases from the inside toward the outside along the radius of the first transparent electrode having a circular shape; and
a second area in which the phase correction quantity becomes a maximum value, and a third area in which the phase correction quantity decreases as the radius increases,

wherein the second step includes:

making a difference between a maximum value among phase correction quantities by a plurality of second split electrodes in a certain segment and a reference correction quantity by the second split electrodes be smaller than a difference of the phase correction quantity by the first split electrodes between the certain segment and a next segment in a direction in which the radius increases in the first area;

making phase correction quantities by a plurality of second split electrodes in a certain segment be equal to the reference correction quantity by the second split electrodes respectively in the second area; and

making a difference between a maximum value among phase correction quantities by a plurality of second split electrodes in a certain segment and the reference correction quantity by the second split electrodes be smaller than a difference of the phase correction quantity by the first split electrodes between the certain segment and a next segment in a direction in which the radius decreases in the third area.

9. The aberration correcting method according to claim 7 or 8,
   wherein the second step includes:

   calculating a difference of phase correction quantities by the first split electrodes between a certain segment and a next segment in a direction in which the radius increases and dividing the difference thus obtained by the number of second split electrodes in the certain segment so as to make the result value be a difference of phase correction quantities between second split electrodes adjacent to each other in the certain segment in the first area;

   making phase correction quantities by a plurality of second split electrodes in a certain segment be equal to the reference correction quantity by the second split electrodes respectively in the second area; and

   calculating a difference of phase correction quantities by the first split electrodes between a certain segment and a next segment in a direction in which the radius decreases and dividing the difference thus obtained by the number of second split electrodes in the certain segment so as to make the result value be a difference of phase correction quantities between second split electrodes adjacent to each other in the certain segment in the third area.

10. The aberration correcting method according to claim 7, 8 or 9,
    wherein the second step includes:

    calculating a difference ($\triangle Va(m)$) of phase correction quantities by the first split electrodes between a certain segment (m) and a next segment (m+1) in a direction in which the radius increases and substituting the calculated value into the following equation so as to obtain a phase correction quantity (n+p-1) by the second split electrodes in the certain segment (m),

$$Vb(n+p-1) = (\Delta Va(m)/x)(p-1) + Vb(0),$$

where n is a number of the second split electrode corresponding to a certain segment (m), p is a p-th second split electrode in one segment, x is the number of the second split electrodes corresponding to one first split electrode, and Vb(0) is a reference correction quantity by the second split electrodes;

making phase correction quantities by a plurality of second split electrodes in a certain segment (m) be equal to the reference correction quantity by the second split electrodes respectively in the second area; and

calculating a difference ($\triangle Va(m)$) of phase correction quantities by the first split electrodes between a certain segment (m) and a next segment (m+1) in a direction in which the radius decreases and substituting the calculated value into the following equation so as to obtain a phase correction quantity (n+p-1) by the second split electrodes in the certain segment (m),

$$Vb(n+p-1) = (\Delta Va(m)/x)(x-p) + Vb(0).$$

# FIG. 1

EP 1 843 335 A2

FIG. 2

FIG. 3

FIG. 4A

161

Z1'

Z1

Z1'

FIG. 4B

FIG. 5A

162

FIG. 5B

FIG. 6

SEGMENT m

ELECTRODE $A_m$

Z1    165                                    161a                      Z1'

161

160

162

162a    ELECTRODE $B_{n+1}$

ELECTRODE $B_n$

FIG. 7

FIG. 8

| DISC | LIQUID CRYSTAL ELEMENT TEMPERATURE (℃) | ELECTRODE | | | | | | | |
|---|---|---|---|---|---|---|---|---|---|
| | | A1 | A2 | ... | ... | ... | ... | ... | Am |
| BD (Layer0) | 10 | 0 | 50 | 100 | 150 | ... | ... | 100 | 0 |
| | 30 | 0 | 50 | 100 | 150 | ... | ... | 100 | 0 |
| | 50 | 0 | 50 | 100 | 150 | ... | ... | 100 | 0 |
| | 70 | 0 | 50 | 100 | 150 | ... | ... | 100 | 0 |
| BD (Layer1) | 10 | 0 | 50 | 100 | 150 | ... | ... | 100 | 0 |
| | 30 | 0 | 50 | 100 | 150 | ... | ... | 100 | 0 |
| | 50 | 0 | 50 | 100 | 150 | ... | ... | 100 | 0 |
| | 70 | 0 | 50 | 100 | 150 | ... | ... | 100 | 0 |
| DVD (Layer0) | 10 | 0 | 50 | 100 | 150 | ... | ... | 100 | 0 |
| | 30 | 0 | 50 | 100 | 150 | ... | ... | 100 | 0 |
| | 50 | 0 | 50 | 100 | 150 | ... | ... | 100 | 0 |
| | 70 | 0 | 50 | 100 | 150 | ... | ... | 100 | 0 |
| DVD (Layer1) | 10 | 0 | 50 | 100 | 150 | ... | ... | 100 | 0 |
| | 30 | 0 | 50 | 100 | 150 | ... | ... | 100 | 0 |
| | 50 | 0 | 50 | 100 | 150 | ... | ... | 100 | 0 |
| | 70 | 0 | 50 | 100 | 150 | ... | ... | 100 | 0 |
| CD | 10 | 0 | 50 | 100 | 150 | ... | ... | 100 | 0 |
| | 30 | 0 | 50 | 100 | 150 | ... | ... | 100 | 0 |
| | 50 | 0 | 50 | 100 | 150 | ... | ... | 100 | 0 |
| | 70 | 0 | 50 | 100 | 150 | ... | ... | 100 | 0 |

EP 1 843 335 A2

## FIG. 9

```
                        ( START )
                            │
                            ▼
S110    ┌──────────────────────────────────┐
        │ OBTAIN DISC TYPE, CURRENT LAYER,  │
        │ TEMPERATURE                       │
        └──────────────────────────────────┘
                            │
                            ▼
S120    ┌──────────────────────────────────┐
        │ OBTAIN DRIVE VOLTAGES FOR         │
        │ GROUP OF ELECTRODES A             │
        └──────────────────────────────────┘
                            │
                            ▼
S130    ┌──────────────────────────────────┐
        │ INITIALIZE SEGMENT NUMBER         │
        │ (m = 1)                           │
        └──────────────────────────────────┘
                            │
                            ▼
S140    ┌──────────────────────────────────────────────────────┐
        │ DISCRIMINATE AREA OF ELECTRODE Am BASED ON HOW PHASE   │
        │ CORRECTION QUANTITY HAS CHANGED ALONG WITH INCREASE OF │
        │ RADIUS OF LIQUID CRYSTAL ELEMENT                       │
        │ AREA α: INCREASE WITH RESPECT TO RADIUS OF LIQUID      │
        │         CRYSTAL ELEMENT                                │
        │ AREA β: MAXIMUM WITH RESPECT TO RADIUS OF LIQUID       │
        │         CRYSTAL ELEMENT                                │
        │ AREA γ: DECREASE WITH RESPECT TO RADIUS OF LIQUID      │
        │         CRYSTAL ELEMENT                                │
        └──────────────────────────────────────────────────────┘
                            │
                            ▼
S150                   ╱ BRANCH PROCESS ╲
                       ╲ ACCORDING TO AREA ╱
```

S160a
CALCULATE DRIVE VOLTAGE DIFFERENCE ΔVa (m) BETWEEN Am AND Am'

S160b
CALCULATE DRIVE VOLTAGE DIFFERENCE ΔVa (m) BETWEEN Am AND Am'

S160c
CALCULATE DRIVE VOLTAGE DIFFERENCE ΔVa (m) BETWEEN Am AND Am' (m' = m - 1)

S170a
CALCULATE DRIVE VOLTAGES TO ELECTRODES B BASED ON ΔVa (m)

S170b
CALCULATE DRIVE VOLTAGES TO ELECTRODES B BASED ON ΔVa (m)

S170c
CALCULATE DRIVE VOLTAGES TO ELECTRODES B BASED ON ΔVa (m)

S180
PROCESS FOR ALL SEGMENTS COMPLETED?

NO

S185
m = m + 1

YES

S190
SET CALCULATED DRIVE VOLTAGES TO LIQUID CRYSTAL DRIVER

( END )

FIG. 10A

FIG. 10B

FIG. 10C

FIG. 11

**REFERENCES CITED IN THE DESCRIPTION**

**Patent documents cited in the description**

- JP 2001273663 A
- JP 9304748 A
- JP 2005275185 A